Europäisches Patentamt

European Patent Office

Office européen des brevets

(11) Veröffentlichungsnummer: **0 211 259**
**A1**

# (12) EUROPÄISCHE PATENTANMELDUNG

(21) Anmeldenummer: 86109375.5

(22) Anmeldetag: 09.07.86

(51) Int. Cl.⁴: **C08C 19/06**

(30) Priorität: 05.08.85 DE 3528007

(43) Veröffentlichungstag der Anmeldung:
**25.02.87 Patentblatt 87/09**

(84) Benannte Vertragsstaaten:
**AT CH DE FR GB IT LI NL SE**

(71) Anmelder: **Degussa Aktiengesellschaft**
**Weissfrauenstrasse 9**
**D-6000 Frankfurt am Main 1(DE)**

(72) Erfinder: **Siegmeier, Rainer, Dr.**
**Egenolffstrasse 4**
**D-6000 Frankfurt(DE)**
Erfinder: **Grund, Andreas, Dr.**
**Rilkeweg 15**
**D-6100 Darmstadt(DE)**
Erfinder: **Prescher, Günter, Dr.**
**Liesingstrasse 2**
**D-6450 Hanau 9(DE)**
Erfinder: **Brandt, Udo**
**Fürstenbergstrasse 4**
**D-6450 Hanau 9(DE)**

(54) **Verfahren zur Herstellung von epoxidierten Polybutadienen.**

(57) Epoxidierte Polybutadiene mit einem mittleren Molekulargewicht von 500 bis 100 000 und einem bestimmten Gehalt an Epoxidsauerstoff wurden aus den entsprechenden Polybutadienen mit Hilfe von benzolischer Perpropionsäure hergestellt, die auch ungereinigt mit Maximalgehalten an Wasserstoff, Wasser und Mineralsäure eingesetzt werden konnte.

Fig. 1

EP 0 211 259 A1

## Verfahren zur Herstellung von epoxidierten Polybutadienen

Die Erfindung betrifft ein Verfahren zur Herstellung von epoxidierten Polybutadienen mit einer Percarbonsäure in organischer Lösung, sowie Aufarbeitung des dabei entstandenen Reaktionsgemisches.

Epoxidierte Polybutadiene finden in der Praxis einen überaus großen Anwendungsbereich. Dabei hat die Beschichtung von unterschiedlichen Oberflächen wie Papier, Holz, Metall oder auch Siliziumwafern die größte Bedeutung. Je nach Zusammensetzung der mit epoxidierten Polybutadienen versetzten Lacke werden diese durch thermische und elektrische Energie sowie auch elektromagnetische Strahlung gehärtet.

Da die Polybutadiene ebenfalls in die Gruppe der Olefine fallen, ist es bekannt, sie -im Sinne der Prileschajew-Reaktion -mit Percarbonsäuren zu epoxidieren. So werden häufig Perameisen-oder Peressigsäure verwandt, und zwar nicht nur Perameisensäure in situ, sondern gelegentlich auch Peressigsäure in situ, siehe DE-OS 25 54 093, GB-PS 2 113 692, US-PS 4 309 516, japanische Patentanmeldungen 76/126292 und 76/93998.

Diese beiden Percarbonsäuren haben aber den großen Nachteil, daß die bei der Umsetzung mit dem Polybutadien entstehenden Carbonsäuren, nämlich Ameisen-und Essigsäure, reaktiv sind und durch Sekundärreaktionen auch vernetzte Produkte bilden können. Letztere sind dann in den eingesetzten organischen Lösungsmitteln nicht mehr löslich. Man war daher auf die Verwendung von Monoperphthalsäure übergegangen, siehe französische Patentanmeldung 2 320 972 und DE-OS 25 42 709.

Die Nachteile dieses Verfahrens beruhen darin, daß die ausgefällte Phthalsäure aufwendig durch Filtration aus dem Reaktionsgemisch abgetrennt werden muß. Weiterhin sind für den Ausfällvorgang erhebliche Mengen an Lösungsmitteln zum Verdünnen notwendig, welche zusätzlich noch nicht umgesetzte Persäure enthalten können.

Auffällig ist bei diesem Verfahren eine äußerst niedrige Produktkonzentration, die eine Herstellung im technischen Maßstab als nicht wirtschaftlich erscheinen läßt.

Wenn auch von den aliphatischen Percarbonsäuren, die bis zu 10 Kohlenstoffatome enthalten konnten, außer Perameisen-oder Peressigsäure auch Perbutter-und Perpelargonsäure eingesetzt wurden, so wurde speziell Perpropionsäure nicht zur Epoxidation von Polybutadien verwendet, siehe US-PS 2 851 441.

Die Lösungsmittel für die Percarbonsäuren in den genannten Verfahren beschränkten sich auf entweder Wasser oder Ester bzw. Äther.

Bei der Verwendung von Wasser entstand stets ein zweiphasiges System, das bekanntlich technisch - schwieriger zu handhaben ist, z.B. auch durch eine ungünstige Verteilung des Produkts in den beiden Phasen (US-PS 2 851 441).

Bei Verwendung von Äthern in Gegenwart von Wasserstoffperoxid bzw. der Percarbonsäuren besteht die Gefahr der Peroxydbildung; bei der Verwendung von Estern als Lösungsmittel kann Perhydrolyse eintreten.

Aufgabe der Erfindung ist daher ein Epoxidierungsverfahren für Polybutadiene, das einfach und unter Vermeiden von Nebenproduktbildung durch die anwesenden Lösungsmittel in homogenem Medium durchgeführt wird.

Es wurde nun gefunden, daß man epoxidierte Polybutadiene mit einem mittleren Molekulargewicht von 500 bis 100 000, sowie einen Gehalt von 1 bis 20 Gewichtsprozent Epoxidsauerstoff je 100 g Dienpolymerisat mit einer Percarbonsäure technisch einfach und in homogenem Medium erhalten kann, wenn man Polybutadiene mit einer Lösung von Perpropionsäure in Benzol im Molverhältnis von 1 : 1,0 bis 1 : 1,3 (zu epoxidierende Doppelbindung zu Perpropionsäure) bei einer Temperatur von 10 bis 100 °C, vorzugsweise 20 bis 50 °C, umsetzt, und daß man die freiwerdende Propionsäure nach der Reaktion durch Destillation oder Destillation und Desorption abtrennt, gegebenenfalls in den Prozeß der Perpropionsäureherstellung rückführt und das erhaltene epoxidierte Polybutadien isoliert.

Als Polybutadiene kommen sowohl Homo-als auch Copolymere von konjugierten Dienen in Frage; bevorzugt sind aber Homo-polymere, vor allem die des Polybutadiens.

Unter die konjugierten Diene fallen Butadien-1,3; Isopren; 2,3-Dimethylbutadien-1,3; sowie Chloropren.

Die Diene können 1,4-oder 1,2-verknüpft sein. Es können aber ebenso Gemische aus 1,4-und 1,2-Verknüpfungen vorliegen, wobei die 1,4-Verknüpfung sowohl cis-als auch trans-Anordnung einnehmen kann.

Partner bei einer Mischpolymerisation zu Copolymerisaten sind z.B. Styrol oder substituierte Styrole, Vinyl-bzw. Acryl-oder Methacrylester.

Perpropionsäure kann z.B. gemäß dem in DE-PS 25 19 289 beschriebenen Verfahren hergestellt werden, indem man wäßriges Wasserstoffperoxid mit Propionsäure in Gegenwart von Schwefelsäure umsetzt und anschließend die entstandene Perpropionsäure mit Benzol aus dem Reaktionsgemisch extrahiert. Die auf diese Weise erhaltenen Perpropionsäure in benzolischer Lösung kann noch weiter gereinigt werden, um den Restgehalt an Schwefelsäure, Wasser und Wasserstoffperoxid zu verringern, siehe z.B. DE-PS 25 19 290. Bevorzugt ist aber eine Perpropionsäurelösung, die keiner weiteren Reinigung bedarf; mit anderen Worten, der Rohextrakt aus der Perpropionsäureherstellung kann als solcher direkt eingesetzt werden. Dies führt zu einem erheblich verringerten technischen Aufwand.

Es kann daher eine Perpropionsäurelösung in Benzol verwendet werden, die bis 1,5 Gewichtsprozent Wasserstoffperoxid, 1,5 Gewichtsprozent Wasser und bis zu 800 ppm Mineralsäure enthält.

Nach dem erfindungsgemäßen Verfahren werden die Polybutadiene vorzugsweise als solche, oder aber auch verdünnt in einem geeigneten Lösungsmittel, z.B. Benzol, eingesetzt, wobei man die Konzentration in einem weiten Bereich frei wählt.

Die Lösungen der Perpropionsäure, die unter anderem noch aus Propionsäure bestehen, können zwischen 10 und 30 Gewichtsprozent der Persäure enthalten. Vorzugsweise werden Lösungen mit einem Persäuregehalt von ca. 20 Gewichtsprozent eingesetzt. Ein bevorzugtes Molverhältnis von Polybutadien zu Perpropionsäure liegt bei 1 : 1,0 bis 1 : 1,3 (zu epoxidierende Doppelbindung zu Perpropionsäure). Besonders bevorzugt ist ein Persäureüberschuß von 3 bis 15 Molprozent.

Das erfindungsgemäße Verfahren läßt sich unter verschiedenen Drücken durchführen; im allgemeinen wird unter Normaldruck gearbeitet, das Verfahren läßt sich aber auch bei Über-oder Unterdruck durchführen.

Die Umsetzung kann sowohl diskontinuierlich oder kontinuierlich in für diese Art der Reaktion geeigneten Reaktoren, wie Rührkesseln, Rührkesselkaskaden, Rühr-oder Schlaufenreaktoren, erfolgen, wobei die Reaktionswärme auf beliebige Weist, z.B. Siedekühlung oder innen-bzw. außenliegende Kühleinrichtungen, abgeführt wird.

Geeignete Werkstoffe für die Reaktionsapparate zur Durchführung des erfindungsgemäßen Verfahrens sind z.B. Glas, Edelstahl oder emailliertes Material.

Die Perpropionsäure wird mit dem Polybutadien auf beliebige Art zusammengebracht. So kann man beide Reaktionsteilnehmer zusammen oder nacheinander in beliebiger Reihenfolge in den Reaktor einbringen. Bei diskontinuierlicher Arbeitsweise wird vorzugsweise das Polybutadien vorgelegt und die Persäure unter Kontrolle der Reaktionstemperatur zudosiert; es kann aber ebensogut umgekehrt verfahren werden, d.h. man legt die Persäure vor und dosiert das Olefin temperaturkontrolliert zu. Bei dieser Art der Reaktionsführung sind jedoch die Epoxygruppen nicht statistisch auf die Polymerketten verteilt. Erfolgt die Umsetzung kontinuierlich, so können beide Reaktanten getrennt oder gemeinsam dem Reaktor zugeführt werden. Bei Verwendung mehrerer hintereinandergeschalteter Reaktoren, wie z.B. einer Rührkesselkaskade oder einer Folge von Rührkesseln mit einem Rohrreaktor als Nachreaktor, kann man sowohl Persäure-also auch Polybutadien-Menge auf mehrere Reaktoren verteilen. Zum Lösen von Polybutadien können neben dem bevorzugten Benzol auch Toluol, Chlorbenzol oder halogenierte Aliphaten eingesetzt werden. Nach dem erfindungsgemäßen Verfahren ist eine kontinuierliche Arbeitsweise besonders vorteilhaft. Gemäß dieser wird das Polybutadien bzw. seine Lösung mit einer Lösung von Perpropionsäure in Benzol im Molverhältnis 1 : 1,0 bis 1 : 1,3 pro zu epoxidierender Doppelbindung bei den genannten Temperaturen von 10 bis 100 °C in ein Reaktionssystem eingespeist, das aus einer Folge von 1 bis 4 ideal durchmischten Reaktoren und einem Nachreaktor besteht, wobei man die Verweilzeit so einstellt, daß der Umsatz, bezogen auf die Anzahl zu epoxidierender Doppelbindungen nach dem oder den ideal durchmischten Reaktor(en) mindestens 80 Molprozent und nach dem Nachreaktor mindestens 95, bevorzugt über 98 Molprozent, beträgt. Anschließend wird das den Nachreaktor verlassende Reaktionsgemisch in einer Kombination von Destillations-und Desorptionsschritten von Benzol, Propionsäure, unumgesetzter Perpropionsäure sowie sonstigen flüchtigen Bestandteilen befreit. Diese Auftrennung des Reaktionsgemisches kann, da das gebildete Polyepoxid die Komponente mit dem höchsten Siedepunkt des Gemisches darstellt, nach einer der folgenden Varianten durchgeführt werden.

Variante 1 (diskontinuierlich)

Gemäß dieser werden die einzelnen Bestandteile des Reaktionsgemisches in der Reihenfolge ihrer Siedepunkte einzeln oder als Gemische destillativ oder destillativ und desorptiv entfernt. Hierbei gehen Fraktionen von Benzol, Resten Perpropionsäure, Propionsäure und sonstige leicht flüchtige Bestandteile über. Als Sumpf verbleibt das Polyepoxid. Das abgetrennte Benzol sowie die Propionsäure können gegebenenfalls nach weiteren Reinigungsschritten in die Persäureherstellung rückgeführt werden.

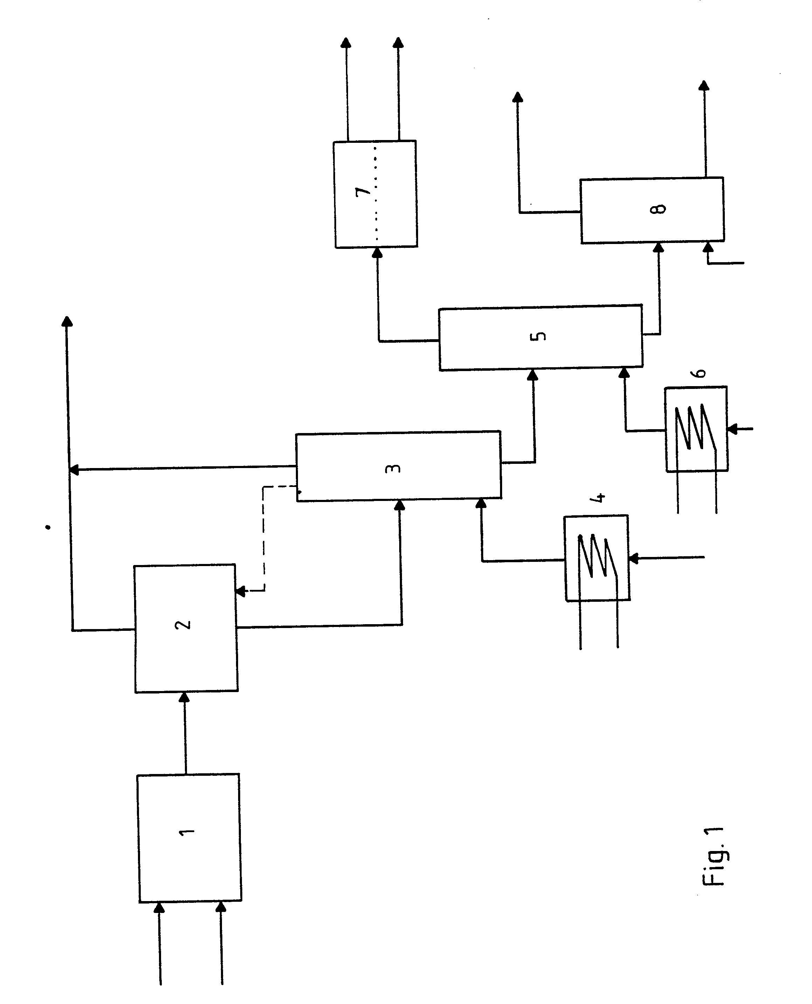

Variante 2 (kontinuierlich, Abbildung 1)

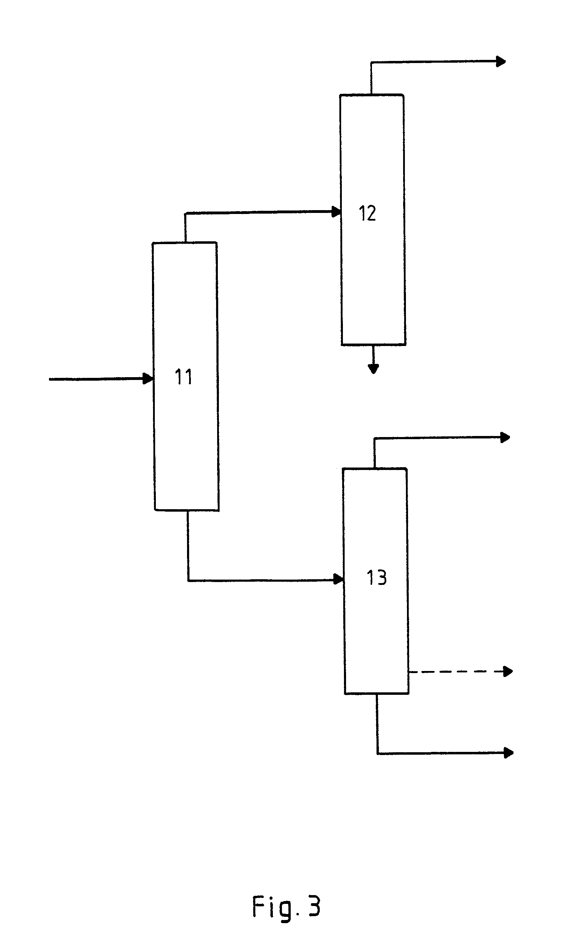

Nach dieser kontinuierlich durchzuführenden Variante werden zunächst, nachdem das Reaktionsgemisch die Reaktionseinheit 1 verlassen hat, Benzol, Propionsäure und nichtumgesetzte Perpropionsäure größtentiels in der ein-oder mehrstufigen Destillationseinheit 2 entfernt. Diese besteht aus geeigneten Apparaten wie Dünnschicht-, Fallfilm-oder Umlaufverdampfern. Es ist vorteilhaft, unter vermindertem Druck von 0,5 bis 600, vorzugsweise 10 bis 300 mbar, zu destillieren - (Temperatur des Heizmediums 50 bis 150 °C). Die mittleren Verweilzeiten, bezogen auf die einzelnen Stufen, der Verdampfung, liegen bei maximal 10 Minuten, bevorzugt werden Verweilzeiten von maximal 5 Minuten. Anschließend wird nach dem erfindungsgemäßen Verfahren die im Rohprodukt verbliebene Menge Propionsäure in der Desorptionseinheit 3 mit Benzoldampf, der im Verdampfer 4 generiert wird, desorptiv entfernt. Die Brüden aus der Desorptionseinheit 3 können entweder an der Destillationseinheit 2 vorbeigeführt oder durch diese hindurchgeführt werden. Nach diesem Schritt werden aus dem Polyepoxid die verbliebenen Spuren Benzol mit Wasserdampf aus dem Verdampfer 6 in der Desorptionseinheit 5 und/oder Stickstoff bzw. sonstigen Inertgasen in der Desorptionseinheit 8 desorbiert. Es ist besonders bevorzugt, zunächst mit Wasserdampf und anschließend mit Inertgasen zu desorbieren. Das aus der Desoptionseinheit 5 stammende Kondensat trennt sich im Phasentrenner 7 in Wasser, welches in den Verdampfer 6, gegebenenfalls nach Ergänzung, zurückgeführt wird, und organische Phase, die vorwiegend Benzol und Propionsäure enthält; diese wird gegebenenfalls nach weiterer Aufarbeitung, der Perpropionsäureherstellung oder Epoxidation zugeführt. Ebenfalls werden die aus den Destillations-bzw. Desorptionseinheiten 2 und 3 stammenden Kondensatströme, die im wesentlichen aus Benzol, nichtumgesetzter Perpropion-und Propionsäure bestehen, nach weiterer Auftrennung, -siehe Abbildung 3 -deren Beschreibung später erfolgt, in die Persäureherstellung bzw. Epoxidation rückgeführt.

Als Desorptionseinheit in allen Beispielen eignen sich Apparate wie z.B. Fallfilmverdampfer, Sambay-Verdampfer, Kolonnen mit Einbauten oder Füllkörpern oder ähnliche Vorrichtungen, die einen guten Stoffaustausch zwischen gasförmiger und flüssiger Phase ermöglichen und die dem Fachmann bekannt sind.

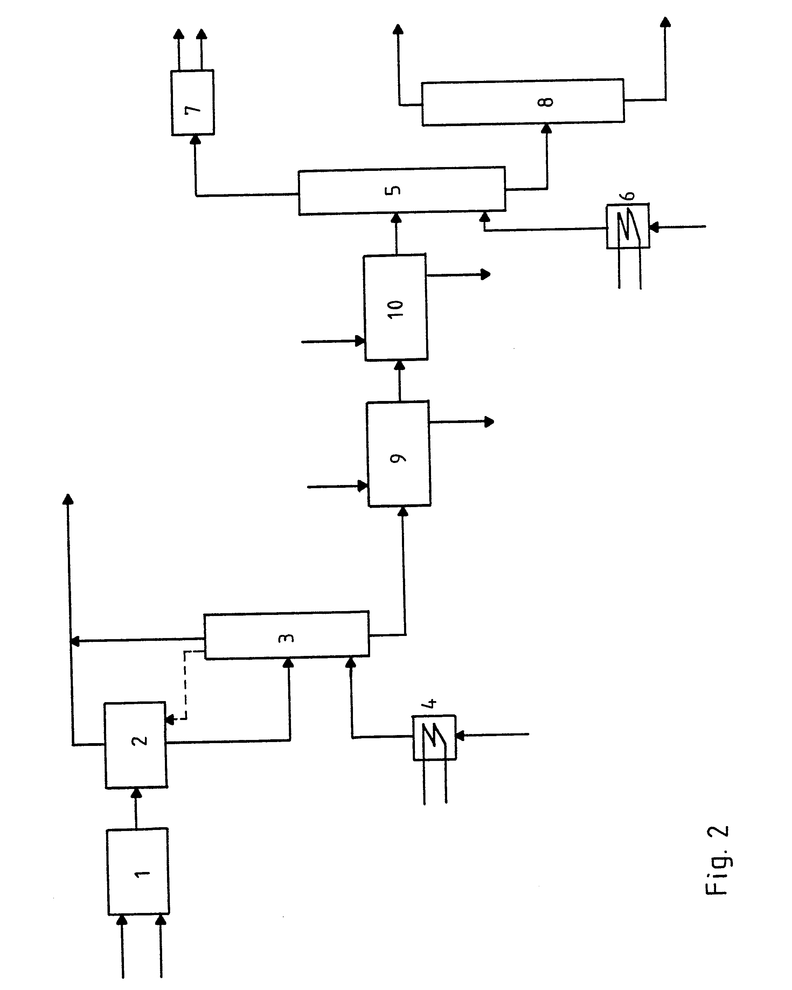

Variante 3 (kontinuierlich, Abbildung 2)

Gemäß der kontinuierlich anzuwendenden Variante 3 werden wie bei "Variante 2" Benzol, unumgesetzte Perpropionsäure und Propionsäure in der ein-oder mehrstufigen Destillationseinheit 2 entfernt. Anschließend wird in der Desorptionseinheit 3 restliche Propionsäure mit Benzoldampf desorbiert. Zur Entfernung von verbliebenen Spuren an Propionsäure wird nun das Rohepoxid mit wäßrigen Alkalien in der Extraktion 9 und anschließend mit Wasser in der ein-oder mehrstufigen Extraktionseinheit 10 gewaschen. Geeignete Apparate für diese Schritte sind Extraktionskolonnen verschiedener Bauart oder auch Mixer-Settler-Einheiten, deren Betriebsweise und Auslegung dem Fachmann wohl bekannt sind. Als wäßrige Alkalilösungen können Lösungen von z.B. NaOH, KOH, $Na_2CO_3$, $K_2CO_3$, $NaHCO_3$, $KHCO_3$, $NH_3$ usw. eingesetzt werden, wobei deren Konzentration in einem weiten Bereich frei wählbar ist. Bevorzugt wird eine NaOH-Lösung mit einer Konzentration zwischen 0,2 bis 15 Gewichtsprozent, besonders bevorzugt 0,5 bis 1,0 Gewichtsprozent. Bei Einsatz von Mixer-Settler-Einheiten für die Wäsche mit Wasser kann das Wasser im Gegenstrom geführt werden, es kann aber auch jede Einheit mit Frischwasser betrieben werden. Vorteilhaft wird ein Teil des Abwassers aus den Mixer-Settler-Einheiten zum Ansetzen der Alkali-Lösung verwendet. Die Alkali-und Wasserwäsche kann in einem Temperaturbereich von 10 bis 90 °C betrieben werden, bevorzugt werden Temperaturen von 30 bis 70 °C. In der Alkali-Wäsche beträgt das Gewichtsverhältnis von durchgesetztem Epoxid zu Alkalilösung 1 : 1 bis 100 : 1, in der Wasserwäsche liegt das Verhältnis von Epoxiddurchsatz zu Wasserdurchsatz bei 1 : 1 bis 100 : 1. Im Anschluß an die Wasserwäsche erfolgt die weitere Aufarbeitung durch Desorption mit Wasserdampf und/oder Inertgas wie bei Variante 2 beschrieben. Vor der Wäsche kann das erhaltene Rohepoxid durch z.B. Benzol verdünnt werden.

Bei allen Varianten durch Kombination von Destillations-und Desorptionsschritten fallen Kondensate an, die überwiegend aus Benzol, unumgesetzter Perpropionsäure und sonstigen Leichtsiedern bestehen; sie werden nach dem erfindungsgemäßen Verfahren in eine aus einer oder mehreren Kolonnen bestehende Destillationseinheit 11 - (Zeichnung 3) überführt. Diese liefert als Kopfprodukt Benzol und gegebenenfalls weitere Leichtsieder. Ersteres wird gegebenenfalls nach weiterer Destillation in 12 in das Herstellungsverfahren der Perpropionsäure zurückgeführt. Im Sumpf der Destillationseinheit 11 fällt ein Gemisch aus Propionsäure, Perpropionsäure und Benzol mit einem Benzolanteil von 5 bis 35 Gewichtsprozent, bezogen auf die Sumpfmischung, an. Dieses Gemisch wird einer weiteren Destillationseinheit 13 zugeführt, in der man die Gesamtmenge des zugeführten Benzols und der Perpropionsäure mit Anteilen Propionsäure über Kopf abzieht und dabei eine Konzentration von Perpropionsäure im Destillat von 25 Gewichtsprozent nicht überschreitet und dieses Kopfprodukt in das Herstellungsverfahren der Perpropionsäure oder in die Umsetzung des Polyolefins mit Perpropionsäure zurückführt. Als Sumpfprodukt in Kolonne 13 fällt Propionsäure an, die nach weiterer Aufarbeitung wie Reindestillation in die Herstellung der Perpropionsäure, gegebenenfalls nach Ergänzung, zurückgeführt wird. Besonders worteilhaft ist es, die in 13 anfallende Propionsäure dampfförmig oberhalb des Sumpfes abzuziehen und zu kondensieren, da hierdurch der weitere Reinigungsschritt entfällt.

Erfindungsgemäß werden alle destillativen Aufarbeitungsschritte vorzugsweise unter vermindertem Druck, z.B. 0,5 bis 600 mbar, durchgeführt. Kolonnen, in denen Benzol oder Propionsäure als Kopfprodukt anfällt, können ebenso bei Normaldruck betrieben werden.

Das erfindungsgemäße Verfahren bietet eine Reihe von überraschenden Vorteilen. Mit Hilfe der sogenannten Prileschajew-Reaktion ist es nach diesem Verfahren möglich, epoxidierte Polybutadiene im technischen Maßstab auf gefahrlose Weise in hoher Ausbeute herzustellen. Die auf diese Weise erhaltenen Produkte zeichnen sich durch außerordentliche Reinheit, hohen Epoxidgehalt, Geruchslosigkeit und helle Farbe aus.

Ebenfalls besonders niedrig ist der Gehalt an ionischen Verunreinigungen, wodurch ein Produkt mit deutlich besseren Eigenschaften im Vergleich mit nach anderen Verfahren hergestellten Polyepoxiden vorstehender Struktur zur Verfügung steht. Besonders vorteilhaft ist, daß durch Wahl der entsprechenden Molverhältnisse "Doppelbindung zu Perpropionsäure" der Epoxidationsgrad zwischen 0 und 100 % eingestellt werden kann. Der Bereich 5 bis 50 %, besonders aber der von 20 bis 40 %, wird bevorzugt.

Das beschriebene Verfahren ist wirtschaftlich, da alle Hilfsmedien rückgeführt werden. Das Verfahren ist besonders umweltfreundlich, da aus dem Oxidationsmittel lediglich Wasser als Abfall entsteht; darüberhinaus fallen nur geringe Mengen an sonstigen Abwässern, Leichtsiedern und Destillationsrückständen an, die unproblematisch und gefahrlos entsorgt werden können.

Erfindungsgemäß sind nur kurze Reaktionszeiten nötig, was die technische Durchführung besonders wirtschaftlich gestaltet.

Es war überraschend und nicht vorhersehbar, daß die Umsetzung des vorgenannten Polybudatiens mit einer rohen Perpropionsäure, die noch Mineralsäure, Wasser und Wasserstoffperoxid in den vorgenannten Konzentrationen enthält, bei weitestgehender Unterdrückung von Neben-und Folgereaktionen durchführbar ist. Weiterhin war nicht vorhersehbar, daß die dabei anfallenden Reaktionsgemisch erfindungsgemäß destillativ bzw. destillativ und desorptiv aufarbeitbar sind, ohne daß sich der Epoxidgehalt der Produkte merklich verringert.

Beispiel 1 (diskontinuierlich)

Zu 542 g Polybutadien (Mikrostruktur: 67,2 % 1,2-Verknüpfung; 15,6 % trans-1,4-Verknüpfung; 16,7 % cis-1,4-Verknüpfung) verdünnt mit 1200 ml Benzol, wurden unter Rühren und Kühlen auf 30 °C innerhalb 45 Minuten 1350 g (3,3 Mol) Perpropionsäure (22 Gewichtsprozent) in Benzol gegeben. Die Perpropionsäure wurde nach dem Verfahren der DE-PS 25 19 289 hergestellt und enthält 0,56 Gewichtsprozent $H_2O_2$; 0,88 Gewichtsprozent $H_2O$ und 540 ppm $H_2SO_4$. Diese Perpropionsäure wurde für die Beispiele 1 bis 4 verwendet. Anschließend rührte man 150 Minuten bei 30 °C nach. Der Umsatz an Persäure betrug dann 97,5 %. Die erhaltene klare, schwach gelbe Lösung wurde innerhalb 270 Minuten bei 90 °C und einem Druck von 100 mbar über einen Dünnschichtverdampfer gegeben, wobei gleichzeitig im Gegenstrom ca. 220 g/Stunde Benzoldampf geführt wurden. Das so erhaltene Rohepoxid wurde jetzt bei 90 °C/20 mbar über den Dünnschichtverdampfer gegeben; im Gegenstrom wurde ein schwacher Stickstoffstrom geführt. Als Sumpf erhielt man 623 g hellgelbes Epoxypolybutadien mit einem Epoxidgehalt von 32,1 %>

Beispiel 2 (kontinuierlich)

In den ersten Rührkessel einer Reaktionseinheit, bestehend aus zwei Rührkesseln vom Volumen jeweils 1500 ml sowie einem als Rohrreaktor ausgebildetem Nachreaktor, der ein Volumen von 790 ml hat, wurden stündlich 722 g Perpropionsäure in Benzol (ca. 22 Gew.-%) und 382,5 g Polybutadien (entsprechend Beispiel 1), gelöst in 400 ml Benzol, eingespeist, was einem Molverhältnis Persäure zu vorhandener Doppelbindung von 1,0 : 4 entspricht.

Die Reaktionstemperatur betrug im ersten Reaktor 40 °C, im zweiten Reaktor 42 °C und im Nachreaktor 50 °C. Die Umsätze an Persäure betrugen nach der Rührkesselkaskade 91,3 %, nach dem Rohrreaktor 98,1 %. Gemäß Aufarbeitungsvariante 2 wurden zunächst in einem Sambay-Verdampfer mit der Fläche von 0,065 m² bei einer Temperatur von 90 °C und einem Druck von 100 mbar Benzol, Perpropionsäure und Propionsäure abgetrennt. Restliche Propionsäure wurde in einem zweiten Verdampfer gleichen Typs und gleicher Fläche bei 90 °C und 100 mbar bei einem Durchsatz von 290 g/h Benzoldampf desorbiert. Die Brüden aus Verdampfer 2 werden vollständig im Gegenstrom zum Produktstrom in den 1. Verdampfer geführt. Nachfolgend wurde das Epoxid in zwei Desorptionseinheiten, bestehend aus jeweils einem Sambay-Verdampfer (Fläche 0,065 m²), bei 100 mbar mit 43 g/h Wasserdampf und bei 20 mbar mit 27 g/h Stickstoff bei Temperaturen von 90 °C behandelt. Als Produkt fielen stündlich 417,7 g epoxidiertes Polybutadien mit folgenden Kennzahlen an:

Epoxidgehalt (val/kg): 4,28 $\stackrel{\triangle}{=}$ Epoxidationsgrad von 24,5 %.

Beispiel 3 (kontinuierlich)

In den ersten Rührkessel einer Reaktionseinheit, bestehend aus zwei Rührkesseln vom Volumen jeweils 1500 ml sowie einem als Rohrreaktor ausgebildetem Nachreaktor, der ein Volumen von 790 ml hat, wurden stündlich 494,3 g Perpropionsäure in Benzol (ca. 22 Gew.-%) und 314,5 g Polybutadien eingespeist, was einem Molverhältnis Persäure zu vorhandener Doppelbindung von 1,0 : 4,8 entspricht.

Die Reaktionstemperatur betrug im ersten Reaktor 51 °C, im zweiten Reaktor 52 °C und im Nachreaktor 58 °C. Die Umsätze an Persäure betrugen nach der Rührkesselkaskade 92,6 %, nach dem Rohrreaktor 98,8 %. Gemäß Aufarbeitungsvariante 2 wurden zunächst in einem Sambay-Verdampfer mit der Fläche von 0,065 m² bei einer Temperatur von 90 °C und einem Druck von 100 mbar Benzol, Perpropionsäure und Propionsäure abgetrennt. Restliche Propionsäure wurde in einem zweiten Verdampfer gleichen Typs und gleicher Fläche bei 90 °C und 100 mbar bei einem Durchsatz von 330 g/h Benzoldampf desorbiert. Die Brüden des 2. Verdampfers wurden nicht durch Verdampfer 1 geführt.

Nachfolgend wurde das Epoxid in zwei Desorptionseinheiten, bestehend aus jeweils einem Sambay-Verdampfer (Fläche 0,065 m²) bei 100 mbar mit 41 g/h Wasserdampf und bei 20 mbar mit 32 g/h Stickstoff bei Temperaturen von 90 °C behandelt. Als Produkt fielen stündlich 336,4 g epoxidiertes Polybutadien mit folgenden Kennzahlen an:

Epoxidgehalt (val/kg): 3,67 $\stackrel{\triangle}{=}$ Epoxidationsgrad von 20,5 %.

Beispiel 4 (kontinuierlich)

In den ersten Rührkessel einer Reaktionseinheit, bestehend aus zwei Rührkesseln vom Volumen jeweils 1500 ml sowie einem als Rohrreaktor ausgebildetem Nachreaktor, der ein Volumen von 1900 ml hat, wurden stündlich 783 g Perpropionsäure in Benzol (ca. 22 Gew.-%) und 314,4 g Polybutadien gelöst in 290 ml Benzol, eingespeist, was einem Molverhältnis Persäure zu vorhandener Doppelbindung von 1,0 : 3,04 entspricht.

Die Reaktionstemperatur betrug im ersten Reaktor 41 °C, im zweiten Reaktor 40 °C und im Nachreaktor 50 °C. Die Umsätze an Persäure betrugen nach der Rührkesselkaskade 91,8 %, nach dem Rohrreaktor 98,6 %. Gemäß Aufarbeitungsvariante 3 wurden zunächst in einem Sambay-Verdampfer mit der Fläche von 0,065 m² bei einer Temperatur von 90 °C und einem Druck von 100 mbar Benzol, Perpropionsäure und Propionsäure abgetrennt. Restliche Propionsäure wurde in einem zweiten Verdampfer gleichen Typs und gleicher Fläche bei 90 °C und 100 mbar bei einem Durchsatz von 308 g/Stunde Benzoldampf desorbiert. Die Brüden wurden entsprechend Beispiel 3 geführt. Das so als Sumpf erhaltene Rohepoxid wurde nun mit ca. 450 ml/Stunde Benzol verdünnt und in einem Mixer-Settler-System mit 0,1 %iger Natronlauge (410 ml/Stunde) und anschließend in einer Folge von drei Mixer-Settler-Einheiten mit Wasser (jeweils 180 ml/Stunde) gewaschen. Nachfolgend wurde das Epoxid in zwei Desorptionseinheiten, bestehend aus jeweils einem Sambay-Verdampfer (Fläche 0,065 m²) bei 100 mbar mit 39 g/Stunde Wasserdampf und bei 20 mbar mit 35 g/Stunde Stickstoff bei Temperaturen von 90 °C behandelt. Als Produkt fielen stündlich 357,1 g epoxidiertes Polybutadien mit folgenden Kennzahlen an:

Epoxidgehalt (val/kg): 5,71 $\stackrel{\triangle}{=}$ Epoxidationsgrad von 32,5 %.

Das in den Beispielen 3 und 4 eingesetzte Polybutadien entsprach ebenfalls dem von Beispiel 1.

**Ansprüche**

1. Verfahren zur Herstellung von epoxidierten Polybutadienen aus Polybutadienen, die ein mittleres Molekulargewicht von 500 bis 100 000, sowie einen Gehalt von 1 bis 20 Gewichtsprozent Epoxidsauerstoff je 100 g Dienpolymerisat besitzen, mit einer Percarbonsäure in organischer Lösung, dadurch gekennzeichnet, daß man Polybutadiene mit einer Lösung von Perpropionsäure in Benzol im Molverhältnis von 1 : 1,0 bis 1 : 1,3 (zu epoxidierende Doppelbindung zu Perpropionsäure) bei einer Temperatur von 10 bis 100 °C, vorzugsweise 20 bis 50 °C, umsetzt, und daß man die freiwerdende Propionsäure nach der Reaktion durch Destillation oder Destillation und Desorption abtrennt, in den Prozeß der Perpropionsäureherstellung gegebenenfalls rückführt und das erhaltene epoxidierte Polybutadien isoliert.

2. Verfahren nach Anspruch 1, dadurch gekennzeichnet, daß die Perpropionsäurelösung maximal einen Gehalt von 1,5 Gewichtsprozent Wasserstoffperoxid, 1,5 Gewichtsprozent Wasser und ca. 800 pm Mineralsäure besitzt.

3. Kontinuierliches Verfahren nach den Ansprüchen 1 und 2, dadurch gekennzeichnet, daß man das zu epoxidierende Polybutadien mit einer Lösung von Perpropionsäure in Benzol im Molverhältnis 1 : 1 bis 1 : 1,3 in ein Reaktionssystem einspeist, das aus einer Folge von 1 bis 4 ideal durchmischten Reaktoren und einem Nachreaktor besteht, die Reaktion bei einer Temperatur von 10 bis 100 °C durchführt, wobei man die Verweilzeit so einstellt, daß der Umsatz, bezogen auf die Anzahl der zu epoxidierenden olefinischen Doppelbindungen, nach dem oder den ideal durchmischten Reaktoren bei mindestens 80 Molprozent und nach dem Nachreaktor bei mindestens 95, bevorzugt über 98. Molprozent, liegt, und daß man das aus dem Nachreaktor austretende Gemisch in einer Kombination von Destillations-und Desorptionsschritten von Benzol, Propionsäure, geringen Mengen an Perpropionsäure und von anderen Leichtsiedern befreit.

4. Verfahren nach den Ansprüchen 1 bis 3, dadurch gekennzeichnet, daß man die Destillations- und Desorptionsschritte unter vermindertem Druck von 0,5 bis 600 mbar bei Temperaturen des Heizmediums von 50 bis 150 °C und bei Verweilzeiten von maximal 10 Minuten, bevorzugt maximal 5 Minuten, in den einzelnen Schritten, durchführt.

5. Verfahren nach den Ansprüchen 1 bis 4, dadurch gekennzeichnet, daß man zunächst Benzol und Propionsäure sowie die geringen Mengen Perpropionsäure größtenteils destillativ abtrennt, worauf man die verbliebene Menge Propionsäure im Rohepoxid mit Benzoldampf weiter desorptiv entfernt und entweder hieran direkt anschließend das Benzol und Spuren von Propionsäure desorptiv mit Wasserdampf und/oder Inertgasen austreibt, oder daß man nach der Desorption mit Benzoldampf das rohe Polyepoxid, gegebenenfalls nach Verdünnen mit Benzol, zunächst mit wäßrigen Alkalien und anschließend mit Wasser wäscht und erst dann die Desorption mit Wasserdampf und/oder Inertgasen anschließt.

6. Verfahren nach den Ansprüchen 1 bis 5, dadurch gekennzeichnet, daß man das aus der Kombination von Destillations-und Desorptionsschritten erhaltene Gemisch aus Benzol, Propionsäure, geringen Mengen Perpropionsäure, sowie gegebenenfalls anderen Leichtsiedern in eine aus zwei oder mehreren Destillationskolonnen bestehende Destillationsanlage führt und in dem ersten Destillationsschritt über Kopf Benzol, gegebenenfalls im Gemisch mit anderen Leichtsiedern, abzieht, das man gegebenenfalls nach destillativer Reinigung in das Herstellungsverfahren der Perpropionsäure wieder zurückführt, und daß man im Sumpf die Gesamtmenge an Perpropionsäure und Propionsäure, sowie Anteile von Benzol in Mengen von 5 bis 35 Gewichtsprozent, bezogen auf die Sumpfmischung, entnimmt und diese Mischung in eine zweite Destillationsstufe führt, in der man die Gesamtmenge des darin enthaltenen Benzols und der Perpropionsäure mit Anteilen an Propionsäure über Kopf abzieht und dabei eine Konzentration von Perpropionsäure in dem Kopfprodukt von mehr als 25 Gewichtsprozent nicht überschreitet, dieses Kopfprodukt in das Herstellungsverfahren der Perpropionsäure oder in die Umsetzung der Perpropionsäure mit Polybutadien zurückführt, und daß man die Propionsäure als Sumpfprodukt, gegebenenfalls dampfförmig oberhalb des Sumpfes, abzieht und in das Herstellungsverfahren der Perpropionsäure zurückführt.

Fig. 1

Fig. 2

Fig. 3

**Europäisches Patentamt**

# EUROPÄISCHER RECHERCHENBERICHT

Nummer der Anmeldung

EP 86 10 9375

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 030 336 (F.P. GREENSPAN) * Anspruch 1; Spalte 3, Zeilen 14-16,21,36-41,50-53,66-67 * | 1-2 | C 08 C 19/06 |
| | --- | | |
| X | GB-A-2 109 797 (NIPPON PETROCHEMICALS) * Anspruch 2; Seite 2, Zeilen 10-14,36-37,41,46-48 * | 1-2 | |
| | --- | | |
| X | DE-B-1 203 463 (BASF) * Spalte 5, Zeilen 5-17 * | 1-2 | |
| | ----- | | |

|  |  |
|---|---|
| | RECHERCHIERTE SACHGEBIETE (Int. Cl.4) |
| | C 08 C |

Der vorliegende Recherchenbericht wurde für alle Patentansprüche erstellt.

| Recherchenort | Abschlußdatum der Recherche | Prüfer |
|---|---|---|
| DEN HAAG | 13-11-1986 | VAN HUMBEECK F.W.C. |